(19)

Europäisches Patentamt
European Patent Office
Office européen des brevets

(11) **EP 4 169 885 A1**

(12) **EUROPEAN PATENT APPLICATION**
published in accordance with Art. 153(4) EPC

(43) Date of publication:
26.04.2023 Bulletin 2023/17

(21) Application number: 21825577.6

(22) Date of filing: 26.04.2021

(51) International Patent Classification (IPC):
$C03C\ 17/00^{(2006.01)}$   $G09F\ 9/00^{(2006.01)}$

(52) Cooperative Patent Classification (CPC):
C03C 17/00; G09F 9/00

(86) International application number:
PCT/JP2021/016607

(87) International publication number:
WO 2021/256089 (23.12.2021 Gazette 2021/51)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 19.06.2020 JP 2020106291

(71) Applicant: AGC INC.
Chiyoda-ku,
Tokyo 1008405 (JP)

(72) Inventors:
• KASHIMA, Izuru
Tokyo 100-8405 (JP)
• IMOTO, Yuji
Tokyo 100-8405 (JP)

(74) Representative: Müller-Boré & Partner
Patentanwälte PartG mbB
Friedenheimer Brücke 21
80639 München (DE)

(54) **GLASS STRUCTURE AND COVER GLASS**

(57) The present invention provides a glass structure comprising a glass substrate in which a stepped surface formed by the difference in level between a thick sheet portion and a thin sheet portion is not readily visually recognizable. A glass structure (1) is provided with: a glass substrate which has a thick sheet portion (3) and a thin sheet portion (4); and a filler (6) that covers a stepped surface (5) formed by the difference in level between the thick sheet portion (3) and the thin sheet portion (4). The difference in the refractive index between the glass substrate (2) and the filler (6) at a wavelength of 555 nm is 0.008 or less in absolute value, and the difference in the refractive index between the glass substrate (2) and the filler (6) at a wavelength of 507 nm is 0.008 or less in absolute value.

FIG. 1

EP 4 169 885 A1

**Description**

TECHNICAL FIELD

The present invention relates to a glass structure and a cover glass.

BACKGROUND ART

In the related art, a glass substrate having a structure in which parts with different thicknesses are connected to each other has been used as a cover glass in a display device such as an in-vehicle display device (see, for example, Patent Literature 1).

CITATION LIST

PATENT LITERATURE

Patent Literature 1: Chinese Patent Application Publication No. 109081561

SUMMARY OF INVENTION

TECHNICAL PROBLEM

The glass substrate having a structure in which parts with different thicknesses are connected to each other includes a thick portion and a thin portion thinner (smaller in thickness) than the thick portion.

When used as a cover glass, such a glass substrate is attached to, for example, an in-vehicle display device in a state where at least a part of the thin portion is elastically deformed.

The present inventors have found that a step surface formed by difference in height between the thin portion and the thick portion may be visually recognized. Since a cover glass used for an in-vehicle display device is required to have high aesthetics, it is not preferable that the step surface is visible.

Accordingly, an object of the present invention is to provide a glass structure including a glass substrate in which a step surface formed by difference in height between a thick portion and a thin portion is difficult to be visually recognized.

SOLUTION TO PROBLEM

As a result of intensive studies, the present inventors have found that the above problems can be solved by adopting the following configuration.

Namely, the present invention provides the following [1] to [7].

[1] A glass structure including: a glass substrate that includes a thick portion and a thin portion thinner than the thick portion; and a filler that covers a step surface formed by difference in height between the thick portion and the thin portion, in which a refractive index difference at a wavelength of 555 nm between the glass substrate and the filler is 0.008 or less in an absolute value, and a refractive index difference at a wavelength of 507 nm between the glass substrate and the filler is 0.008 or less in an absolute value.

[2] The glass structure according to the above [1], in which a thickness $t_3$ of the thick portion is 0.2 mm or more, and a thickness $t_4$ of the thin portion is smaller than the thickness $t_3$ of the thick portion.

[3] The glass structure according to the above [2], in which the thickness $t_4$ of the thin portion is smaller than 0.5 mm.

[4] The glass structure according to any one of the above [1] to [3], in which the glass substrate is a chemically strengthened glass.

[5] The glass structure according to any one of the above [1] to [4], in which a recessed portion formed by a configuration of two thick portions and one thin portion disposed between the two thick portions is filled with the filler.

[6] A cover glass configured to cover a display panel of an in-vehicle display device, the cover glass including: the glass structure according to any one of the above [1] to [5].

[7] An in-vehicle display device including: a display panel; and the glass structure according to any one of the above [1] to [5] that covers the display panel, in which the thin portion is attached to the display panel in an elastically deformed state.

ADVANTAGEOUS EFFECTS OF INVENTION

According to the present invention, it is possible to provide a glass structure including a glass substrate in which a step surface formed by difference in height between a thick portion and a thin portion is difficult to be visually recognized.

BRIEF DESCRIPTION OF DRAWINGS

[FIG. 1] FIG. 1 is a cross-sectional view showing a glass structure.
[FIG. 2] FIG. 2 is a cross-sectional view showing a modification of the glass structure.
[FIG. 3] FIG. 3 is a cross-sectional view showing a display device.
[FIG. 4] FIG. 4 is a cross-sectional view showing another display device.

DESCRIPTION OF EMBODIMENTS

Hereinafter, an embodiment of the present invention is described with reference to the drawings. However, the present invention is not limited to the following embodiment. Various modifications and replacements can be made to the following embodiment without departing from the scope of the present invention.

Hereinafter, a range represented by "to" includes both ends of the range. For example, a range represented by "A to B" includes A and B.

In the present description, "mass" has the same meaning as "weight".

[Glass Structure]

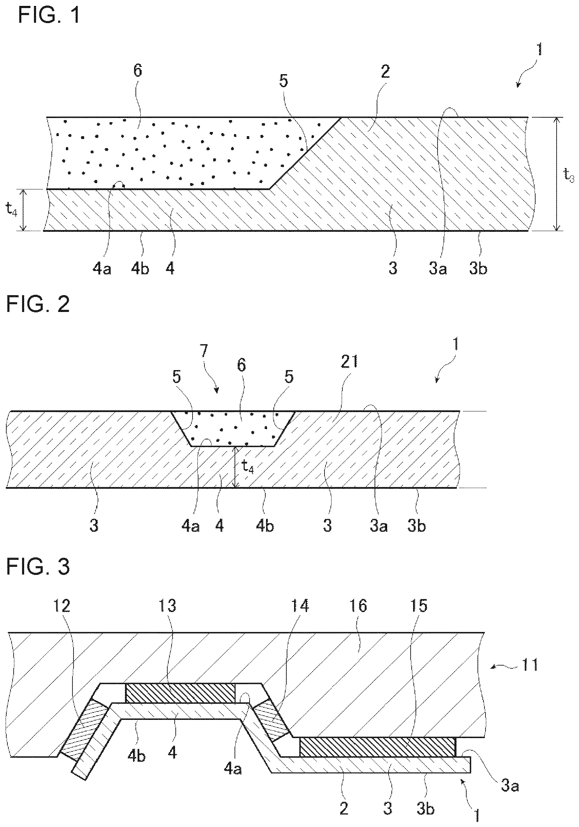

A glass structure 1 is described with reference to FIG. 1 to FIG. 3.

FIG. 1 is a cross-sectional view showing the glass structure 1.

The glass structure 1 includes a glass substrate 2. The glass substrate 2 includes a thick portion 3 and a thin portion 4. A thickness $t_4$ of the thin portion 4 is smaller than a thickness $t_3$ of the thick portion 3.

The thick portion 3 has a first main surface 3a as one main surface and a second main surface 3b as the other main surface. The thin portion 4 has a first main surface 4a as one main surface and a second main surface 4b as the other main surface. Main surfaces such as the first main surface 3a are shown as flat surfaces in FIG. 1, but may be curved surfaces.

A step surface 5 is formed by difference in height between the thick portion 3 and the thin portion 4.

The step surface 5 is shown as a surface inclined with respect to the main surface such as the first main surface 3a in FIG. 1, but may be a surface perpendicular to the main surface such as the first main surface 3a.

The step surface 5 is shown as a flat surface in FIG. 1, but may be a curved surface. The radius of curvature of the step surface 5 as a curved surface is not particularly limited, and is, for example, 100 μm to 500 μm. The radius of curvature is measured using a contour measuring device (e.g., CONTOURECORD manufactured by TOKYO SEIMITSU CO., LTD.) at a magnification of, for example, 100 to 200 times.

When such a glass substrate 2 is used, for example, as a cover glass for an in-vehicle display device, a display panel is disposed on a first main surface 3a and first main surface 4a side (see FIG. 3). A user of the in-vehicle display device views the in-vehicle display device from a second main surface 3b and second main surface 4b side.

At this time, as described above, the user may visually recognize the step surface 5 that is a boundary between the thick portion 3 and the thin portion 4.

Therefore, a filler 6 is disposed on the first main surface 4a of the thin portion 4. The filler 6 covers the first main surface 4a of the thin portion 4 and the step surface 5 and reaches the height of the first main surface 3a of the thick portion 3.

A refractive index difference at a wavelength of 555 nm between the glass substrate 2 and the filler 6 is 0.008 or less in an absolute value, and a refractive index difference at a wavelength of 507 nm between the glass substrate 2 and the filler 6 is 0.008 or less in an absolute value.

Accordingly, the step surface 5 is less likely to be visually recognized.

The circumstances leading to such a configuration and effect are described below.

First, the present inventors have considered that light from the display panel or the like is reflected by the step surface 5, and the reflected light is recognized, whereby the step surface 5 is visually recognized.

In order to prevent the step surface 5 from being visually recognized, the present inventors have made the refractive index difference between the glass substrate 2 and the filler 6 close to 0 (zero) at a wavelength of 589 nm. A wavelength of 589 nm is a common measurement wavelength for devices that measure a refractive index. However, in this case, it is not possible to prevent the step surface 5 from being visually recognized.

Based on this situation, the present inventors have made further studies and focused on the standard relative luminosity (standard relative luminosity of photopic vision and scotopic vision) defined by the International Commission on Illumination (CIE). According to the standard relative luminosity, humans perceive light around 555 nm most intensely in a bright place, and perceive light around 507 nm most intensely in a dark place.

Therefore, when the present inventors set the refractive index difference at a wavelength of 555 nm between the glass substrate 2 and the filler 6 to 0.008 or less in an absolute value and the refractive index difference at a wavelength of 507 nm between the glass substrate 2 and the filler 6 to 0.008 or less in an absolute value, the step surface 5 is less likely to be visually recognized. It is considered that the reflected light from the step surface 5 is less likely to be visually recognized from a bright place and a dark place, and as a result, the visual recognition for the step surface 5 is prevented.

Unlike a position-fixed type display device, a use place of an in-vehicle display device mounted on a vehicle is changed rapidly and the in-vehicle display device is often repeatedly used alternately in a bright place and a dark place for a short period of time. Therefore, when the glass structure 1 is used as a cover glass for an in-vehicle display device, the above effect is very useful.

When the filler 6 is in contact with the same filler, it is susceptible to the generation of air bubbles due to the difference in thermal expansion between materials and to the effects of ultraviolet rays.

However, since the object in contact with the filler 6 is a glass (the glass substrate 2), it is less susceptible to these effects, and it is presumed that the visual recognition for the step surface 5 can be sufficiently prevented.

For the reason that the visual recognition for the step surface 5 can be further prevented, the refractive index difference at a wavelength of 555 nm between the glass substrate 2 and the filler 6 is preferably 0.006 or less, more preferably 0.003 or less, and even more preferably 0.001 or less in an absolute value.

For the same reason, the refractive index difference at a wavelength of 507 nm between the glass substrate 2 and the filler 6 is preferably 0.006 or less, more preferably 0.003 or less, and even more preferably 0.001 or less in an absolute value.

The refractive index measurement method conforms to the measurement method in [Examples] to be described later.

<Description for Filler>

The filler 6 is not particularly limited as long as it satisfies the refractive index difference described above.

Examples of the filler 6 include cured adhesives (transparent adhesives) such as a thermosetting adhesive and an ultraviolet curing adhesive.

A commercially available product can be used as the adhesive. Specifically, ultraviolet curing adhesives such as NORLAND optical adhesive NBA107 and NORLAND optical adhesive NOA65 (both manufactured by Edmund Optics Japan) can be used. Adhesives that cure quickly and undergo little dimensional change upon curing are preferred.

The filler 6 may be in a liquid state depending on the shape of the filling portion and the amount.

Examples of the liquid filler 6 include water, an oil, an organic solvent, a liquid polymer, an ionic liquid, and a mixture thereof.

More specific examples thereof include propylene glycol, dipropylene glycol, tripropylene glycol, a straight silicone oil (such as a dimethyl silicone oil, a methylphenyl silicone oil, and a methyl hydrogen silicone oil), a modified silicone oil, an acrylic polymer, liquid polybutadiene, a glycerin paste, a fluorine solvent, a fluorine resin, acetone, ethanol, xylene, toluene, water, a mineral oil, and a mixture thereof.

<<Method of Disposing Filler>>

A method for disposing the filler 6 is not particularly limited, and for example, the filler 6 is disposed on the first main surface 4a of the thin portion 4. When the filler 6 reaches the height of the first main surface 3a of the thick portion 3, the step surface 5 is covered with the filler 6.

When the filler 6 is liquid, a device such as a dispenser capable of uniformly supplying a constant amount of liquid may be used. At this time, it is preferable that a high-viscosity sealing member (not shown) or the like is provided in advance on a peripheral edge of the step surface 5 (for example, on an edge of the first main surface 4a of the thin portion 4). Accordingly, the liquid filler 6 is prevented from leaking out.

<Description of Glass Substrate>

The glass substrate 2 is preferably a glass that has undergone a chemical strengthening treatment (chemically strengthened glass).

A compressive stress value (CS) of a compression stress layer in the glass substrate 2 is preferably large from the viewpoint of strength. By increasing the CS to improve the strength, the scratch resistance and the crack resistance are improved, and the flexibility is also improved because it is less likely to crack even when bent. Therefore, the CS of the glass substrate 2 is preferably 400 MPa or more, more preferably 450 MPa or more, and even more preferably 500 MPa or more.

On the other hand, when the CS is too large, it may be difficult to reduce an internal tensile stress (CT), which is described later. Therefore, the CS of the glass substrate 2 is preferably 1200 MPa or less, more preferably 1100 MPa or less, and even more preferably 1000 MPa or less.

A depth (DOL) of the compression stress layer in the glass substrate 2 is preferably 3 μm or more, more preferably 5 μm or more, even more preferably 7 μm or more, and particularly preferably 8 μm or more, in order to improve the strength of the glass substrate 2 and improve the scratch resistance, the crack resistance, and the flexibility.

On the other hand, when the DOL is too large, it may be difficult to reduce the internal tensile stress (CT), which is described later. Therefore, the DOL of the glass substrate 2 is preferably 25 μm or less, more preferably 20 μm or less, and even more preferably 18 μm or less.

The compressive stress value (CS) of the compression stress layer and the depth (DOL) of the compression stress layer in the glass are determined by measurement using a surface stress meter (FSM-6000) manufactured by Orihara industrial co., ltd.

The internal tensile stress (CT) of the glass substrate 2 is preferably 160 MPa or less, more preferably 135 MPa or less, even more preferably 110 MPa or less, particularly preferably 100 MPa or less, and most preferably 75 MPa or less, in order to prevent the violent scattering of fragments during crushing.

The internal tensile stress (CT) of the glass is obtained based on the CS, the DOL, and the thickness t based on the following equation.

$$CT = CS[MPa] \times DOL[mm]/(t[mm] - 2 \times DOL[mm])$$

The thickness $t_3$ of the thick portion 3 is preferably 0.2 mm or more, and more preferably 0.5 mm or more, for the reason that the thick portion 3 has excellent impact resistance. On the other hand, the thickness $t_3$ of the thick portion 3 is preferably 2.5 mm or less, and more preferably 2.0 mm or less.

The thickness $t_4$ of the thin portion 4 is preferably less than 0.5 mm, and more preferably 0.25 mm or less, for the reason that the thin portion 4 can be elastically deformed easily. On the other hand, the thickness $t_4$ of the thin portion 4 is preferably 0.05 mm or more, and more preferably 0.10 mm or more.

The thickness (average thickness) of the glass is obtained by measurement using a micrometer.

<Method for Producing Glass Substrate>

A method for producing the glass substrate 2 is described.

First, a raw plate (not shown) of the glass substrate 2 is prepared.

The raw plate is, for example, a glass plate, and examples of this type of glass include a soda-lime glass and an aluminosilicate glass ($SiO_2$-$Al_2O_3$-$Na_2O$-based glass).

Examples of the glass composition of the raw plate include the following compositions. All of the following compositions are expressed in mol% based on oxides.

(1) A glass containing 50% to 80% of $SiO_2$, 2% to 25% of $Al_2O_3$, 0% to 10% of $Li_2O$, 0% to 18% of $Na_2O$, 0% to 10% of $K_2O$, 0% to 15% of MgO, 0% to 5% of CaO, and 0% to 5% of $ZrO_2$.

(2) A glass containing 50% to 74% of $SiO_2$, 1% to 10% of $Al_2O_3$, 6% to 14% of $Na_2O$, 3% to 11% of $K_2O$, 2% to 15% of MgO, 0% to 6% of CaO, and 0% to 5% of $ZrO_2$, in which the total content of $SiO_2$ and $Al_2O_3$ is 75% or less, the total content of $Na_2O$ and $K_2O$ is 12% to 25%, and the total content of MgO and CaO is 7% to 15%.

(3) A glass containing 68% to 80% of $SiO_2$, 4% to 10% of $Al_2O_3$, 5% to 15% of $Na_2O$, 0% to 1% of $K_2O$, 4% to 15% of MgO, and 0% to 1% of $ZrO_2$.

(4) A glass containing 67% to 75% of $SiO_2$, 0% to 4% of $Al_2O_3$, 7% to 15% of $Na_2O$, 1% to 9% of $K_2O$, 6% to 14% of MgO, and 0% to 1.5% of $ZrO_2$, in which the total content of $SiO_2$ and $Al_2O_3$ is 71% to 75%, the total content of $Na_2O$ and $K_2O$ is 12% to 20%, and the content of CaO is less than 1% if contained.

(5) A glass containing 65% to 75% of $SiO_2$, 0.1% to 5% of $Al_2O_3$, 1% to 6% of MgO, and 1% to 15% of CaO, and $Na_2O$ and $K_2O$ in a total content of 10% to 18%.

(6) A glass containing 60% to 72% of $SiO_2$, 1% to 10% of $Al_2O_3$, 5% to 12% of MgO, 0.1% to 5% of CaO, 13% to 19% of $Na_2O$, and 0% to 5% of $K_2O$, in which RO/(RO+$R_2O$) is 0.20 to 0.42 (where RO is the total content of alkaline earth metal oxides, and $R_2O$ is the total content of alkali metal oxides).

(7) A glass containing 55.5% to 80% of $SiO_2$, 12% to 20% of $Al_2O_3$, 8% to 25% of $Na_2O$, 2.5% or more of $P_2O_5$, and 1% or more of alkaline earth metal RO (RO is MgO + CaO + SrO + BaO).

(8) A glass containing 57% to 76.5% of $SiO_2$, 12% to 18% of $Al_2O_3$, 8% to 25% of $Na_2O$, 2.5% to 10% of $P_2O_5$, and

1% or more of alkaline earth metal RO.

(9) A glass containing 56% to 72% of $SiO_2$, 8% to 20% of $Al_2O_3$, 3% to 20% of $B_2O_3$, 8% to 25% of $Na_2O$, 0% to 5% of $K_2O$, 0% to 15% of MgO, 0% to 15% of CaO, 0% to 15% of $SrO_2$, 0% to 15% of BaO, and 0% to 8% of $ZrO_2$.

When the chemical strengthening treatment described below is performed, for example, a glass for chemical strengthening based on an aluminosilicate glass (for example, "Dragontrail (registered trademark)") is preferably used.

The size (thickness, etc.) of the raw plate is appropriately selected in consideration of the size of the glass substrate 2 to be finally obtained.

<<Slimming>>

Next, the prepared raw plate is slimmed. The slimming is performed using, for example, at least one selected from the group consisting of polishing and etching.

When polishing the raw plate, for example, the polishing is performed to reduce the thickness of a part of the raw plate. Thus, for example, the non-polished portion becomes the thick portion 3 and the polished portion becomes the thin portion 4. The polishing method is not particularly limited, and known polishing pads or the like may be used as appropriate.

When etching the raw plate, first, a portion not desired to be etched (for example, a portion to be the thick portion 3) is masked using a mask material. The material of the mask material is not particularly limited as long as it is a material having resistance to an etching solution to be described later, and known materials can be appropriately selected and used. Examples of such a mask material include a resist material. In this case, a resist material is exposed through a photomask having a desired shape pattern, and the resist material after exposure is developed to form a resist pattern in a portion not desired to be etched.

The masked raw plate is then etched. Accordingly, the unmasked portion of the raw plate melts. Thus, for example, a dissolved portion becomes the thin portion 4, and a portion not dissolved by the masking becomes the thick portion 3.

The etching method is not particularly limited, and a method of immersing the masked raw plate in an etching solution is preferred.

Examples of the etching solution include an aqueous solution containing an acid. Examples of the acid include hydrogen fluoride (HF), sulfuric acid, nitric acid, hydrochloric acid, and hexafluorosilicic acid, and hydrogen fluoride is preferred. The content of the acid such as hydrogen fluoride in the etching solution is preferably 2 mass% to 10 mass%.

After etching, the mask material such as a resist material (resist pattern) is peeled off. Examples of a solution for peeling off the resist material include alkaline solutions containing alkali such as KOH and NaOH.

The raw plate may be masked with a resist pattern and then etched, the resist pattern is peeled off, and then the whole raw plate may be further etched.

<<Chemical Strengthening Treatment>>

The raw plate after slimming may be subjected to a chemical strengthening treatment.

In the case of applying the chemical strengthening treatment, a glass for chemical strengthening is used as the raw plate.

In the chemical strengthening treatment, the glass for chemical strengthening is brought into contact with an inorganic salt composition containing other alkali metal ions having an ionic radius larger than that of alkali metal ions contained in the glass. Accordingly, the alkali metal ions (Li ions and/or Na ions) contained in the glass are exchanged with large alkali metal ions (Na ions and/or K ions) contained in the inorganic salt composition to form a dense compression stress layer.

The density of the glass subjected the chemical strengthening treatment (chemically strengthened glass) gradually increases from the outer edge of a non-ion-exchanged region (intermediate layer) present in the center of the glass toward the surface of the compression stress layer. There is no clear boundary where the density abruptly changes between the intermediate layer and the compression stress layer.

Examples of a method for bringing the inorganic salt composition into contact with the glass for chemical strengthening include: a method of coating the glass for chemical strengthening with the inorganic salt composition in a paste form; a method of spraying an aqueous solution of the inorganic salt composition to the glass for chemical strengthening; and a method of immersing the glass for chemical strengthening in the inorganic salt composition melted by heating to a temperature equal to or higher than the melting point (hereinafter also referred to as a "molten salt").

Among these, a method of immersing the glass for chemical strengthening in a molten salt is preferred.

When the glass for chemical strengthening contains Na ions, an inorganic salt composition containing potassium nitrate ($KNO_3$) and further containing at least one melting agent selected from the group consisting of $K_2CO_3$, $Na_2CO_3$,

KHCO$_3$, NaHCO$_3$, K$_3$PO$_4$, Na$_3$PO$_4$, K$_2$SO$_4$, Na$_2$SO$_4$, KOH, and NaOH may be used.

The melting point of potassium nitrate is 330°C, which is lower than the strain point (usually 500°C to 600°C) of the glass for chemical strengthening.

When immersing the glass for chemical strengthening in the molten salt, the glass for chemical strengthening is preheated to, for example, 100°C or higher, then immersed in the heated molten salt, and then pulled up from the molten salt and cooled.

The chemical strengthening temperature (the temperature of the molten salt) may be equal to or lower than the strain point (usually, 500°C to 600°C) of the glass for chemical strengthening. In order to obtain a deep compression stress layer, the temperature is preferably 350°C or higher, from the viewpoint of shortening the treatment time, more preferably 400°C or higher, and even more preferably 430°C or higher.

The immersion time of the glass for chemical strengthening in the molten salt is preferably 1 minute or longer, more preferably 5 minutes or longer, and even more preferably 10 minutes or longer, considering the balance between the strength of the obtained chemically strengthened glass and the depth of the compression stress layer. On the other hand, the immersion time is preferably 10 hours or shorter, more preferably 8 hours or shorter, and even more preferably 4 hours or shorter.

After the chemical strengthening treatment, it is preferable to wash the glass (chemically strengthened glass) with a washing liquid. Examples of the washing liquid include optionally treated industrial water and ion-exchanged water. Among these, ion-exchanged water is preferred.

Preferred washing conditions vary depending on the washing liquid to be used. However, in order to sufficiently remove salts adhering to the glass, it is preferable to wash the glass at 0°C to 100°C when ion-exchanged water is used, for example.

Examples of the washing method include: a method of immersing the glass in a water tank containing ion-exchange water or the like; a method of exposing the surface of the glass to running water; and a method of spraying the washing liquid toward the surface of the glass using a shower.

<Modification of Glass Substrate>

FIG. 2 is a cross-sectional view showing a modification of the glass structure 1.

In FIG. 2, the same parts as those in FIG. 1 are denoted by the same reference numerals, and the description thereof is omitted.

In a glass substrate 21 shown in FIG. 2, one thin portion 4 is disposed between two thick portions 3. A recessed portion 7 is formed by two step surfaces 5 and the first main surface 4a of the thin portion 4. The recessed portion 7 is filled with the filler 6.

In the glass structure 1 shown in FIG. 2, the refractive index difference between the glass substrate 21 and the filler 6 also satisfies the above range. Accordingly, the step surfaces 5 are less likely to be visually recognized.

[Display Device]

FIG. 3 is a cross-sectional view showing a display device 11.

The display device 11 includes a plurality of display panels (that is, a display panel 12, a display panel 13, a display panel 14, and a display panel 15), which are held by a panel holding portion 16 having a concave-convex shape. At this time, the three display panels 12, 13 and 14 are disposed in a recessed portion of the panel holding portion 16.

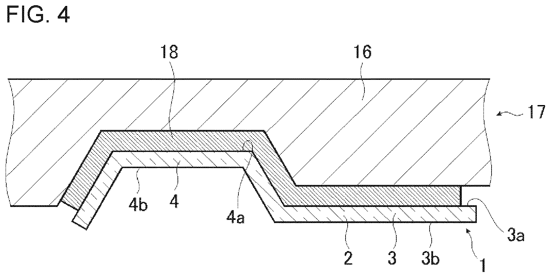

FIG. 4 is a cross-sectional view showing another display device 17. The same parts as those of the display device 11 in FIG. 3 are denoted by the same reference numerals, and the description thereof is omitted.

The display device 17 includes one display panel 18 having a concave-convex shape, which is held by the panel holding portion 16 having a concave-convex shape.

Each display panel is, for example, a liquid crystal panel. In this case, a backlight unit is disposed on a back side of the liquid crystal panel. The display panel may be, for example, an organic EL (electroluminescence) panel, a PDP (plasma display panel), or an electronic ink panel. A touch panel or the like may be included.

The above glass structure 1 (see FIG. 1) is assembled to the display device 11 and the display device 17 as described above.

More specifically, in the display device 11 shown in FIG. 3, the first main surface 3a of the thick portion 3 of the glass substrate 2 is bonded to the display panel 15 via an OCA (optical clear adhesive) (not shown). Further, in a state where the thin portion 4 of the glass substrate 2 is elastically deformed, the first main surface 4a of the thin portion 4 is attached to the display panel 12, the display panel 13, and the display panel 14 via an OCA (not shown).

In the display device 17 shown in FIG. 4, in a state where the thin portion 4 of the glass substrate 2 is elastically deformed, the glass substrate 2 is attached to the display panel 18 via an OCA (not shown).

In the display device 11 and the display device 17, the glass structure 1 functions as a cover glass for covering the display panel.

Examples of the display device 11 and the display device 17 include an in-vehicle display device to be mounted and used on a vehicle.

Specific examples include an in-vehicle display device having an instrument cluster (cluster) disposed in front of a driver's seat and a center information display (CID) disposed in front of a space between the driver's seat and a passenger seat.

In the in-vehicle display device, for example, the concave portion is the cluster, and the convex portion is the CID. In this case, the thin portion 4 functions as a cover glass of the cluster, and the thick portion 3 functions as a cover glass of the CID.

The user of the display device 11 (display device 17) views the display device 11 (display device 17) from the second main surface 3b and second main surface 4b side of the glass structure 1, which is a cover glass.

At this time, since the glass structure 1 is used as the cover glass, the step surface 5, which is the boundary between the thick portion 3 and the thin portion 4, is prevented from being visually recognized by the user.

Examples

Hereinafter, the present invention is specifically described with reference to Examples. However, the present invention is not limited to the following Examples.

Examples 1 to 3 are Examples, and Examples 4 and 5 are Comparative Examples.

<Example 1>

As described below, a glass structure (see FIG. 1) was produced.

<<Production of Glass Substrate>>

First, a glass for chemical strengthening ("Dragontrail Pro" manufactured by AGC Inc., thickness: 0.2 mm) having a size of 120 mm $\times$ 60 mm was prepared as a raw plate to be a glass substrate.

Next, the prepared raw plate was slimmed. More specifically, by polishing the raw plate using a polishing pad, the thickness of a portion to be a thin portion was reduced to 0.1 mm, and a concave curved surface (radius of curvature: 300 $\mu$m) to be a step surface was formed.

Next, the slimmed raw plate was subjected to a chemical strengthening treatment. More specifically, the slimmed raw plate was immersed in a $KNO_3$ molten salt at 380°C for 15 minutes, and then washed with water.

In this way, a glass substrate was obtained. In the obtained glass substrate, the thickness $t_3$ of the thick portion was 0.2 mm, the thickness $t_4$ of the thin portion was 0.1 mm, the compressive stress value (CS) of the compression stress layer was 950 MPa, and the depth (DOL) of the compression stress layer was 5 $\mu$m.

<<Disposition of Filler>>

Next, a silicone oil (methylphenyl silicone oil KF-54, manufactured by Shin-Etsu Silicone Co., Ltd.) was disposed as a filler on the first main surface of the thin portion of the obtained glass substrate, and filled up to the height of the first main surface of the thick portion. Thus, the step surface of the glass substrate was covered with the filler.

At this time, before filling with silicone oil, a sealing member (not shown) was provided on the edge of the first main surface of the thin portion of the glass substrate so as to prevent the silicone oil from leaking out.

Thus, a glass structure (see FIG. 1) was obtained.

<Example 2>

KF-56 (methylphenyl silicone oil, manufactured by Shin-Etsu Silicone Co., Ltd.) was used as a silicone oil as a filler.

Except for this, a glass structure was produced in the same manner as in Example 1.

<Example 3>

A mixed liquid containing KF-56 and HIVAC F-5 (methylphenyl silicone oil, manufactured by Shin-Etsu Silicone Co., Ltd.) was used as a silicone oil as a filler. The mass ratio (KF-56/HIVACF-5) in the mixed liquid was 8/2.

Except for this, a glass structure was produced in the same manner as in Example 1.

<Example 4>

A mixed liquid containing KF-96 (dimethyl silicone oil, manufactured by Shin-Etsu Silicone Co., Ltd.) and KF-56 was used as a silicone oil as a filler. The mass ratio (KF-96/KF-56) in the mixed liquid was 2/8.

<Example 5>

A mixed liquid containing KF-56 and HIVAC F-5 was used as a silicone oil as a filler. The mass ratio (KF-56/HIVACF-5) in the mixed liquid was 6/4.
Except for this, a glass structure was produced in the same manner as in Example 1.

<Refractive Index Difference>

For each glass structure obtained, the refractive index difference at a wavelength of 555 nm between the glass substrate and the filler and the refractive index difference at a wavelength of 507 nm between the glass substrate and the filler were determined. The results are shown in Table 1 below.
At this time, first, the glass substrate was measured for refractive indices at a plurality of wavelengths under the following conditions, the measured values were plotted on a graph (vertical axis: refractive index, horizontal axis: wavelength), and the refractive indices at wavelengths of 555 nm and 507 nm were determined based on an approximated curve (polynomial approximation).
For the filler, the refractive indices at wavelengths of 555 nm and 507 nm were obtained in the same manner.

<<Measurement Conditions for Refractive Index of Glass Substrate>>

•Measuring device: Kalnew precision refractometer KPR-2000 (accuracy: ±0.00003 (23 °C))
•Measurement wavelength: d (587.562 nm), C (656.273 nm), F (486.133 nm), e (546.074 nm), g (435.834 nm), C' (643.847 nm), and F' (479.991 nm)

<<Measurement Conditions for Refractive Index of Filler: Examples 1 to 5>>

•Measuring device: Kalnew precision refractometer KPR-3000 (accuracy: ±0.00002 (23 °C))
•Measurement wavelength: h (404.656 nm), F (486.133 nm), d (587.294 nm), r (706.519 nm), and LD785 (785 nm)

<Visual Recognition for Step Surface>

Each glass structure obtained was observed in a bright place and a dark place.
In the case of adapting to an environment of 500 lux, which is the standard for general indoor brightness, photopic vision is achieved, and a wavelength sensitivity is based on 555 nm is used.
In the case of adapting to an environment of 10 lux or less, a scotopic vision (or a thin place) is achieved, and a wavelength sensitivity based on 507 nm is used.
Therefore, each glass structure was observed under each illuminance with 500 lux as the illuminance in a bright place and 5 lux as the illuminance in a dark place.
The glass structure observed under each illuminance was evaluated according to the following criteria. The evaluation results are shown in Table 1 below. Practically, A, B or C is preferred, A and B are more preferred, and A is even more preferred.

A: the step surface of the glass substrate cannot be visually recognized.
B: the step surface of the glass substrate is slightly visually recognized.
C: the step surface of the glass substrate is somewhat clearly visually recognized.
D: the step surface of the glass substrate is clearly visually recognized.

[Table 1]

| | | Example 1 | Example 2 | Example 3 | Example 4 | Example 5 |
|---|---|---|---|---|---|---|
| Wavelength: 555 nm | Refractive index of glass substrate | 1.5083 | 1.5083 | 1.5083 | 1.5083 | 1.5083 |
| | Refractive index of filler | 1.508 | 1.513 | 1.501 | 1.5241 | 1.481 |
| | Refractive index difference (absolute value) | 0.0003 | 0.0047 | 0.0073 | 0.0158 | 0.0273 |
| Visual recognition for step surface (bright place) | | A | B | C | D | D |
| Wavelength: 507 nm | Refractive index of glass substrate | 1.5113 | 1.5113 | 1.5113 | 1.5113 | 1.5113 |
| | Refractive index of filler | 1.5129 | 1.5182 | 1.506 | 1.5299 | 1.4855 |
| | Refractive index difference (absolute value) | 0.0016 | 0.0069 | 0.0053 | 0.0186 | 0.0258 |
| Visual recognition for step surface (dark place) | | A | C | B | D | D |

[Conclusion on Evaluation Result]

As shown in Table 1 above, in Examples 1 to 3 in which the refractive index difference at a wavelength of 555 nm is 0.008 or less in an absolute value and the refractive index difference at a wavelength of 507 nm is 0.008 or less in an absolute value, the visual recognition for the step surface of the glass substrate is prevented more than Examples 4 and 5 whose refractive index difference does not meet the above range.

Although the present invention has been described in detail with reference to specific embodiments, it is apparent to those skilled in the art that various changes and modifications can be made without departing from the spirit and scope of the present invention. The present application is based on a Japanese Patent Application (No. 2020-106291) filed on June 19, 2020, contents of which are incorporated herein by reference.

REFERENCE SIGNS LIST

1: glass structure
2: glass substrate
3: thick portion
3a: first main surface of thick portion
3b: second main surface of thick portion
4: thin portion
4a: first main surface of thin portion
4b: second main surface of thin portion
5: step surface
6: filler
7: recessed portion
11: display device
12, 13, 14, 15: display panel
16: panel holding portion
17: display device
18: display panel
21: glass substrate (modification)
$t_3$: thickness of thick portion

$t_4$: thickness of thin portion

**Claims**

1. A glass structure comprising: a glass substrate that comprises a thick portion and a thin portion thinner than the thick portion; and a filler that covers a step surface formed by difference in height between the thick portion and the thin portion,

   wherein a refractive index difference at a wavelength of 555 nm between the glass substrate and the filler is 0.008 or less in an absolute value, and
   a refractive index difference at a wavelength of 507 nm between the glass substrate and the filler is 0.008 or less in an absolute value.

2. The glass structure according to claim 1, wherein a thickness $t_3$ of the thick portion is 0.2 mm or more, and a thickness $t_4$ of the thin portion is smaller than the thickness $t_3$ of the thick portion.

3. The glass structure according to claim 2, wherein the thickness $t_4$ of the thin portion is smaller than 0.5 mm.

4. The glass structure according to any one of claims 1 to 3, wherein the glass substrate is a chemically strengthened glass.

5. The glass structure according to any one of claims 1 to 4, wherein a recessed portion formed by a configuration of two thick portions and one thin portion disposed between the two thick portions is filled with the filler.

6. A cover glass configured to cover a display panel of an in-vehicle display device, the cover glass comprising the glass structure according to any one of claims 1 to 5.

7. An in-vehicle display device comprising: a display panel; and the glass structure according to any one of claims 1 to 5 that covers the display panel,
   wherein the thin portion is attached to the display panel in an elastically deformed state.

FIG. 1

FIG. 2

FIG. 3

FIG. 4

<div style="text-align:center">**INTERNATIONAL SEARCH REPORT**</div>

| International application No. |
| --- |
| PCT/JP2021/016607 |

**A. CLASSIFICATION OF SUBJECT MATTER**
Int. Cl. C03C17/00(2006.01)i, G09F9/00(2006.01)i
FI: C03C17/00, G09F9/00 313, G09F9/00 302

According to International Patent Classification (IPC) or to both national classification and IPC

**B. FIELDS SEARCHED**

Minimum documentation searched (classification system followed by classification symbols)
Int. Cl. C03C17/00, G09F9/00

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2006-162968 A (SANYO ELECTRIC CO., LTD.) 22 June 2006, paragraphs [0001], [0026]-[0040], [0049], fig. 1-3, paragraphs [0001], [0026]-[0040], [0049], fig. 1-3 | 1-3, 5 |
| A | | 4, 6-7 |
| X | JP 2002-217150 A (SEMICONDUCTOR ENERGY LABORATORY CO., LTD.) 02 August 2002, paragraphs [0039]-[0042], [0046], [0107], [0111], [0112], fig. 1, 2, paragraphs [0039]-[0042], [0046], [0107], [0111], [0112], fig. 1, 2 | 1-5 |
| A | | 6-7 |
| A | WO 2018/135495 A1 (SEKISUI CHEMICAL CO., LTD.) 26 July 2018, entire text | 1-7 |

☒ Further documents are listed in the continuation of Box C.       ☒ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 17.06.2021 | 29.06.2021 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2021/016607

C (Continuation).   DOCUMENTS CONSIDERED TO BE RELEVANT

| Category* | Citation of document, with indication, where appropriate, of the relevant passages | Relevant to claim No. |
|---|---|---|
| A | CN 109081561 A (TRULY OPTO-ELECTRONICS LTD.) 25 December 2018, entire text | 1-7 |
| A | JP 2019-194142 A AGC INC.) 07 November 2019, entire text | 1-7 |
| A | JP 2003-108027 A (SHARP CORP.) 11 April 2003, entire text | 1-7 |
| A | JP 2000-235351 A (HITACHI, LTD.) 29 August 2000, entire text | 1-7 |
| P, X | JP 2020-112619 A (MITSUBISHI ELECTRIC CORP.) 27 July 2020, paragraphs [0001], [0009], [0023]-[0041], fig. 1-3 | 1-2, 4-6 |

Form PCT/ISA/210 (continuation of second sheet) (January 2015)

INTERNATIONAL SEARCH REPORT

Information on patent family members

International application No.

PCT/JP2021/016607

| Patent Documents referred to in the Report | Publication Date | Patent Family | Publication Date |
|---|---|---|---|
| JP 2006-162968 A | 22.06.2006 | (Family: none) | |
| JP 2002-217150 A | 02.08.2002 | (Family: none) | |
| WO 2018/135495 A1 | 26.07.2018 | US 2019/0202173 A1 entire text EP 3572477 A1 CN 109642121 A KR 10-2019-0102983 A TW 201842104 A | |
| CN 109081561 A | 25.12.2018 | (Family: none) | |
| JP 2019-194142 A | 07.11.2019 | US 2019/0330103 A1 entire text CN 110407460 A | |
| JP 2003-108027 A | 11.04.2003 | (Family: none) | |
| JP 2000-235351 A | 29.08.2000 | US 2003/0002008 A1 entire text TW 235862 B KR 10-2000-0048197 A | |
| JP 2020-112619 A | 27.07.2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109081561

- JP 2020106291 A